# EUROPÄISCHE PATENTSCHRIFT

(11) **EP 2 597 123 B1**
(45) Veröffentlichungstag und Bekanntmachung des Hinweises auf die Patenterteilung: **14.06.2017**
(21) Anmeldenummer: 12192383.3
(22) Anmeldetag: 13.11.2012
(51) Int. Cl.: C09J 139/02, C09J 179/02, C09J 179/08

(54) **Wässriges Bindemittel für körnige und/oder faserförmige Substrate**
Aqueous adhesive for fibrous and/or granular substrates
Liant aqueux pour substrats granuleux et/ou fibreux

(30) Priorität: 23.11.2011 EP 11190330; 20.03.2012 EP 12160248
(43) Veröffentlichungstag der Anmeldung: 29.05.2013
(73) Patentinhaber: BASF SE, 67056 Ludwigshafen am Rhein (DE)
(72) Erfinder: Kalbe, Michael, 69469 Weinheim (DE); Schilling, Holger, 69488 Birkenau (DE); Michl, Kathrin, 67063 Ludwigshafen (DE); Pfau, Andreas, 67061 Ludwigshafen (DE)
(74) Vertreter: BASF IP Association

(56) Entgegenhaltungen:
- WO-A1-2008/076059
- DE-A1- 4 308 089
- US-A- 4 085 076

## Beschreibung

Gegenstand der vorliegenden Erfindung ist die Verwendung eines wässrigen Bindemittels, enthaltend als wirksame Bestandteile
a) wenigstens ein Vinylamineinheiten enthaltendes Homopolymerisat eines Vinylcarbonsäureamids mit einem Hydrolysegrad ≥ 50 mol-% und/oder ein Polyethylenimin mit verzweigter Struktur [Polyamin A], und
b) wenigstens eine Saccharidverbindung S, wobei
c) das Gewichtsverhältnis des wenigstens einen Polyamins A zur wenigstens einen Saccharidverbindung S 1:99 bis 80:20 beträgt, und
d) wobei die Gesamtmenge der neben dem Polyamin A und Saccharidverbindung S im wässrigen Bindemittel vorliegenden organischen Verbindungen ≤ 30 Gew.-%, bezogen auf die Summe der Gesamtmengen an Polyamin A und Saccharidverbindung S, beträgt,
zur Herstellung von Formkörpern aus Mineralfasern.

Die Verfestigung von faserförmigen und/oder körnigen Substraten, insbesondere in flächenförmigen Gebilden, wie beispielsweise Faservliesen, Faserplatten, Spanplatten oder komplexerer nichtflächiger Formteile etc., erfolgt häufig auf chemischem Weg unter Verwendung eines polymeren Bindemittels. Zur Erhöhung der Festigkeit, insbesondere der Nass- und Wärmestandfestigkeit, werden vielfach Bindemittel eingesetzt, welche Formaldehyd abspaltende Vernetzer enthalten. Damit besteht aber die Gefahr der unerwünschten Formaldehydemission.

Zur Vermeidung von Formaldehydemissionen wurden bereits zahlreiche Alternativen zu den bisher bekannten Bindemitteln vorgeschlagen. So sind aus der US-A 4,076,917 Bindemittel bekannt, welche Carbonsäure- oder Carbonsäureanhydrid-haltige Polymerisate und β-Hydroxyalkylamide als Vernetzer enthalten. Nachteilig ist die relativ aufwendige Herstellung der β-Hydroxyalkylamide.

Aus der EP-A-445578 sind Platten aus feinteiligen Materialien, wie beispielsweise Glasfasern bekannt, in denen Mischungen aus hochmolekularen Polycarbonsäuren und mehrwertigen Alkoholen, Alkanolaminen oder mehrwertigen Aminen als Bindemittel fungieren.

Aus der EP-A-583086 sind formaldehydfreie, wässrige Bindemittel zur Herstellung von Faservliesen, insbesondere Glasfaservliesen, bekannt. Die Bindemittel enthalten eine Polycarbonsäure mit mindestens zwei Carbonsäuregruppen und gegebenenfalls auch Anhydridgruppen sowie ein Polyol. Diese Bindemittel benötigen einen phosphorhaltigen Reaktionsbeschleuniger, um ausreichende Festigkeiten der Glasfaservliese zu erreichen. Es wird darauf hingewiesen, dass auf die Anwesenheit eines derartigen Reaktionsbeschleunigers nur verzichtet werden kann, wenn ein reaktives Polyol eingesetzt wird. Als hochreaktive Polyole werden β-Hydroxyalkylamide genannt.

Die EP-A-651088 beschreibt entsprechende Bindemittel für Substrate aus Cellulosefaser. Diese Bindemittel enthalten zwingend einen phosphorhaltigen Reaktionsbeschleuniger.

Die EP-A-672920 beschreibt formaldehydfreie Binde-, Imprägnier- oder Beschichtungsmittel, die ein Polymerisat, welches zu 2 bis 100 Gew.-% aus einer ethylenisch ungesättigten Säure oder einem Säureanhydrid als Comonomer aufgebaut ist und mindestens ein Polyol enthalten. Bei den Polyolen handelt es sich um substituierte Triazin-, Triazintrion-, Benzol- oder Cyclohexylderivate, wobei die Polyolreste sich stets in 1,3,5-Position der erwähnten Ringe befinden. Trotz einer hohen Trocknungstemperatur werden mit diesen Bindemitteln auf Glasfaservliesen nur geringe Nassreißfestigkeiten erzielt.

Die DE-A-2214450 beschreibt ein Copolymerisat, das aus 80 bis 99 Gew.-% Ethylen und 1 bis 20 Gew.-% Maleinsäureanhydrid aufgebaut ist. Das Copolymerisat wird, zusammen mit einem Vernetzungsmittel, in Pulverform oder in Dispersion in einem wässrigen Medium, zur Oberflächenbeschichtung verwendet. Als Vernetzungsmittel wird ein aminogruppenhaltiger Polyalkohol verwendet. Um eine Vernetzung zu bewirken, muss jedoch auf bis zu 300 °C erhitzt werden.

Aus der US-A 5,143,582 ist die Herstellung hitzebeständiger Vliesmaterialien unter Verwendung eines thermisch aushärtenden, hitzebeständigen Bindemittels bekannt. Das Bindemittel ist frei von Formaldehyd und wird erhalten durch Mischen eines Carbonsäuregruppen, Carbonsäureanhydridgruppen oder Carbonsäuresalzgruppen aufweisenden Polymers und eines Vernetzers. Der Vernetzer ist ein β-Hydroxyalkylamid oder ein Polymer oder Copolymer davon. Das mit dem β-Hydroxyalkylamid vernetzbare Polymer ist beispielsweise aufgebaut aus ungesättigten Mono- oder Dicarbonsäuren, Salzen ungesättigter Mono- oder Dicarbonsäuren oder ungesättigten Anhydriden. Selbsthärtende Polymere werden erhalten durch Copolymerisation der β-Hydroxyalkylamide mit Carboxylgruppen enthaltenden Monomeren.

In der US-A 2004/82689 werden formaldehydfreie wässrige Bindemittel zur Herstellung von Faservliesen, insbesondere Glasfaservliesen, offenbart, welche essentiell aus einer polymeren Polycarbonsäure, einem Polyol und einem Imidazolin-Derivat bestehen. Die erhaltenen gebundenen Faservliese sollen eine reduzierte Wasseraufnahme aufweisen. Es werden unspezifisch sowohl stickstoffhaltige als auch stickstofffreie Polyole offenbart, wobei jedoch insbesondere das stickstoffhaltige Triethanolamin als bevorzugt beschrieben wird. Als spezifische Imidazolin-Derivate werden Umsetzungsprodukte aus einer Fettsäure mit Aminoethylethanolamin oder Diethylentriamin genannt. Die offenbarten wässrigen Bindemittelzusammensetzungen enthalten einen phosphorhaltigen Reaktionsbeschleuniger.

Gemäß der WO 99/09100 sind thermisch härtbare Zusammensetzungen und deren Verwendung als formaldehydfreie Bindemittel zur Herstellung von Formkörpern offenbart, welche neben einem Alkanolamin mit wenigstens zwei OH-Gruppen, ein Polymerisat 1, welches ≤ 5 Gew.-% und ein weiteres Polymerisat 2, welches ≥ 15 Gew.-% einer α,β-ethylenisch ungesättigten Mono- oder Dicarbonsäure in einpolymerisierter Form enthält.

Des Weiteren offenbart die WO10/34645 wässrige Bindemittelsysteme für körnige und/oder faserförmige Substrate, welche als wirksame Bestandteile ein Polymerisat 1, enthaltend ≥ 5,5 Gew.-% und ≤ 20 Gew.-% einer α,β-ethylenisch ungesättigten Mono- oder Dicarbonsäure in einpolymerisierter Form, ein Polymerisat 2, enthaltend ≥ 40 Gew.-% einer α,β-ethylenisch ungesättigten Mono- oder Dicarbonsäure in einpolymerisierter Form und eine Polyolverbindung mit wenigstens zwei Hydroxylgruppen.

In einer prioritätsbegründenden und nicht vorveröffentlichten europäischen Patentanmeldung mit Anmeldenummer 11154347.6 werden wässrige Bindemittel für körnige und/oder faserförmige Substrate offenbart, welche neben einem carbonsäuregruppenhaltigen Polymerisat und einer Polyolverbindung essentiell eine Salzverbindung enthalten. Diese salzhaltigen Bindemittelflotten wirken sich vorteilhaft auf die Nassreißkraft sowie die Reißkraft bei 180 °C der damit gebundenen Faservliese aus.

Ebenfalls in einer prioritätsbegründenden und nicht vorveröffentlichten europäischen Patentanmeldung mit Anmeldenummer 11159420.6 werden wässrige Bindemittel für körnige und/oder faserförmige Substrate offenbart, welche als essentielle Komponenten eine polymere Polycarbonsäure, eine stickstofffreie Polyolverbindung mit wenigstens zwei Hydroxygruppen sowie eine hydroxygruppenfreie organische Stickstoffverbindung mit einem pK_{B}-Wert ≤ 7 enthalten.

Bei saccharidhaltigen wässrigen Bindemittelzusammensetzungen für körnige und/oder faserförmige Substrate ist von folgendem Stand der Technik auszugehen.

In der EP-A 649870 werden Gemische aus Polycarbonsäuren und Saccharidverbindungen im Gewichtsverhältnis von 95:5 bis 20:80 zur Herstellung von Polymerfilmen mit Gassperrwirkung offenbart.

Die EP-A 911361 offenbart wässrige Bindemittelsysteme für körnige und/oder faserförmige Substrate, welche ein Polycarboxypolymer mit einem gewichtsmittleren Molekulargewicht von wenigstens 1000 g/mol und ein Polysaccharid mit einem gewichtsmittleren Molekulargewicht von wenigstens 10000 g/mol, enthält, wobei deren Mengen so bemessen sind, dass das Äquivalenzverhältnis von Carboxylgruppen zu Hydroxylgruppen 3:1 bis 1:20 beträgt.

Des Weiteren offenbart die EP-A 1578879 wässrige Bindemittelzusammensetzungen zum Beschichten von Glasfasern, umfassend ein Polycarboxypolymer, ein Polyalkohol mit wenigstens zwei Hydroxygruppen sowie ein sogenanntes wasserlösliches Streckungsmittel, wobei als wasserlösliches Streckungsmittel insbesondere Polysaccharide mit einem mittleren Molekulargewicht kleiner 10000 g/mol vorgeschlagen werden.

Die WO 2008/150647 offenbart wässrige Bindemittelsysteme zur Herstellung von Fasermatten, umfassend ein Harnstoff/Formaldehyd-Harz und eine wässrige Copolymerisatdispersion, deren Copolymerisat im Wesentlichen aufgebaut ist aus Styrol, Alkylacrylaten bzw. -methacrylaten, Acrylnitril und ein gegebenenfalls substituiertes Acrylamid. Optional kann die wässrige Copolymerisatdispersion noch Stärke enthalten.

Auch die US-A 2009/170978 offenbart wässrige Bindemittelsysteme für Faservliese, umfassend eine wässrige Copolymerisatdispersion, deren Copolymerisat zwischen 5 und 40 Gew.-% wenigstens eines carbonsäuregruppenhaltigen Monomeren in einpolymerisierter Form enthält und eine natürlichen Bindemittelkomponente, ausgewählt aus der Gruppe umfassend Polysaccharide, Pflanzenproteine, Lignine und/oder Ligninsulfonate.

Demgegenüber offenbart die DE-A 4308089 die Verwendung eines Umsetzungsproduktes, gebildet aus einer Polyaminkomponente a), einem Zucker b) sowie zwingend einer Dicarbonsäure-, Aldehyd- und/oder Epoxidkomponente c) zur Verleimung von Holzwerkstücken.

Die US-A 4085076 offenbart Kondensationsharze, hergestellt aus einer Stickstoffkomponente, einem Zucker sowie einem Phenol(derivat) und deren Verwendung als Holzbindemittel.

In der WO-A 2008/76059 werden Holzklebstoffe offenbart, welche als wesentliche Komponenten eine Stärkekomponente und ein Polyvinylaminkomponente enthalten.

In einer prioritätsbegründenden und nicht vorveröffentlichten europäischen Patentanmeldung mit Anmeldenummer 11161026.7 werden wässrige Bindemittel für körnige und/oder faserförmige Substrate offenbart, welche neben einer Saccharidverbindung noch ein spezifisches nitrilguppen- und carbonsäuregruppen- bzw. carbonsäureamidgruppenhaltiges Polymer enthalten.

Allerdings vermögen die mit den vorgenannten Zusammensetzungen hergestellten Formkörper, insbesondere Faservliese, nicht immer in allen mechanischen Eigenschaften, wie der Reißkraft, insbesondere der Nassreißkraft bei Glasfaservliesen voll zu befriedigen. Des Weiteren werden vom Markt verstärkt alternative formaldehydfreie Bindemittelsysteme auf Basis nachwachsender Rohstoffe angefragt.

Aufgabe der vorliegenden Erfindung war es, die Verwendung eines alternativen formaldehydfreien wässrigen Bindemittelsystems auf Basis nachwachsender Rohstoffe für Mineralfasern zur Verfügung zu stellen, durch welches bei Formkörpern, wie beispielsweise Faservliesen gleichwertige bzw. verbesserte mechanische Eigenschaften, wie insbesondere der Nassreißkraft bei Glasfaservliesen resultieren.

Demgemäß wurde die eingangs definierte Verwendung gefunden.

Das erfindungsgemäß eingesetzte Bindemittel enthält als eine essentielle Komponente wenigstens ein Vinylamineinheiten enthaltendes Homopolymerisat eines Vinylcarbonsäureamids mit einem Hydrolysegrad ≥ 50 mol-% und/oder ein Polyethylenimin mit verzweigter Struktur [Polyamin A].

Die erfindungsgemäß vorteilhaft einsetzbaren Polyethylenimine sind durch Polymerisieren von Ethylenimin in Gegenwart von Säuren, Lewissäuren oder Säuren abspaltenden Verbindungen als Katalysator erhältlich. Solche Katalysatoren sind beispielsweise Alkylhalogenide wie Methylchlorid, Ethylchlorid, Propylchlorid, Methylenchlorid, Trichlormethan, Tetrachlorkohlenstoff oder Tetrabrommethan. Die so hergestellten Polyethylenimine weisen eine verzweigte Struktur mit einem Anteil an primären und tertiären Aminogruppen von je ca. 30 % und einem Anteil an sekundären Aminogruppen von ca. 40 % auf. Die Polyethylenimine haben in der Regel gewichtsmittlere Molekulargewichte in dem Bereich von ≥ 500 und ≤ 10000000 g/mol, vorzugsweise ≥ 800 und ≤ 750000 g/mol und insbesondere von ≥ 1000 und ≤ 10000 g/mol. Die Herstellung von Polyethyleniminen durch säurekatalysierte Umsetzung von Ethylenimin ist beispielsweise in der US-A 2,282,306 oder der US-A 3,203,910 offenbart.

Typische Vertreter von Polyethylenimin mit verzweigter Struktur sind unter den Handelsnamen Epomin^{®} SP-006, Epomin^{®} SP-018 oder Epomin^{®} SP-200 der Firma Nippon Shokubai oder Lupasol^{®} FG, Lupasol^{®} G 20, Lupasol^{®} G 35, Lupasol^{®} G 100 und Lupasol^{®} PS der BASF SE bekannt.

Vinylamineinheiten enthaltende Homopolymerisate sind nach einem zweistufigen Verfahren durch Polymerisation von N-Vinylcarbonsäureamiden und Hydrolyse der dabei entstehenden Poly-(N-Vinylcarbonsäureamide) unter Bildung von Vinylamineinheiten zugänglich (vergleiche hierzu beispielsweise US-A 4,421,602, US-A 5,334,287, EP-A 216387, US-A 5,981,689, WO 00/63295, US-A 6,121,409 oder US-A 6,132,558). Beispiele für einsetzbare N-Vinylcarbonsäureamide sind N-Vinylformamid, N-Vinyl-N-methylformamid, N-Vinyl-acetamid, N-Vinyl-N-methylacetamid, N-Vinyl-N-ethyl-acetamid und N-Vinylpropionamid. Als N-Vinylcarbonsäureamid bevorzugt ist N-Vinylformamid.

Die Polymerisation der vorgenannten Monomeren wird üblicherweise in Gegenwart von Radikale bildenden Polymerisationsinitiatoren durchgeführt. Man kann die Homopolymerisate nach allen bekannten Verfahren erhalten, beispielsweise erhält man sie durch Lösungspolymerisation in Wasser, Alkoholen, Ethern oder Dimethylformamid oder in Gemischen aus verschiedenen Lösungsmitteln, durch Fällungspolymerisation, umgekehrte Suspensionspoylmerisation (Polymerisieren einer Emulsion einer monomerhaltigen wässrigen Phase in einer Ölphase) und Polymerisieren einer Wasser-in-Wasser-Emulsion, beispielsweise bei der man eine wässrige Monomerlösung in einer wässrigen Phase löst oder emulgiert und unter Bildung einer wässrigen Dispersion eines wasserlöslichen Polymeren polymerisiert, wie beispielsweise in WO 00/27893 beschrieben. Im Anschluss an die Polymerisation werden die Homopolymerisate, die einpolymerisierte N-Vinylcarbonsäureamideinheiten enthalten, wie unten beschrieben partiell oder vollständig hydrolysiert.

Um Vinylamineinheiten enthaltende Polymerisate herzustellen, geht man vorzugsweise von Homopolymerisaten des N-Vinylformamids aus, wobei diese durch anschließende Hydrolyse der Homopolymerisate unter Bildung von Vinylamineinheiten aus den einpolymerisierten N-Vinylformamideinheiten erhältlich sind, wobei der Hydrolysegrad ≥ 50 und ≤ 100 mol-% und insbesondere bevorzugt ≥ 70 und ≤ 100 mol-% beträgt, jeweils bezogen auf den ursprünglichen Gehalt an nichthydrolysierten N-Vinylcarbonsäureamidgruppen. Der Hydrolysegrad entspricht bei den Homopolymerisaten dem Gehalt an Vinylamingruppen in mol-%. Die Hydrolyse der oben beschriebenen Polymerisate erfolgt nach bekannten Verfahren durch Einwirkung von Säuren (beispielsweise Mineralsäuren wie Schwefelsäure, Salzsäure oder Phosphorsäure, Carbonsäuren wie Ameisensäure oder Essigsäure, bzw. Sulfonsäuren oder Phsophonsäuren), Basen oder Enzymen, wie beispielsweise in der DE-A 3128478 und der US-A 6,132,558 beschrieben. Bei Verwendung von Säuren als Hydrolysemittel liegen die Vinylamineinheiten der Polymerisate als Ammoniumsalz vor, während bei der Hydrolyse mit Basen die freie Aminogruppen entstehen.

Bevorzugt betragen die Hydrolysegrade der verwendeten Homopolymerisate ≥ 85 mol-%, vorteilhaft ≥ 95 mol-% und besonders bevorzugt 100 mol-%.

Die gewichtsmittleren Molekulargewichte der Vinylamineinheiten enthaltenden Homopolymerisate betragen ≥ 500 und ≤ 10000000 g/mol, vorzugsweise ≥ 1000 und ≤ 500000 g/mol und besonders bevorzugt ≥ 5000 und ≤ 400000 g/mol. Diese Molekulargewichtsbereiche entsprechen bei den Homopolymerisaten K-Werten im Bereich von 30 bis 250, vorzugsweise 60 bis 100 (bestimmt nach H. Fikentscher in 5 gew.-%iger wässriger Kochsalzlösung bei 25 °C, einen pH-Wert von 7 und einer Polymerkonzentration von 0,5 Gew.-%).

Die Vinylamineinheiten enthaltenden Homopolymerisate können sowohl in salzhaltiger Form (entsprechend dem erhaltenen Hydrolysegemisch) wie auch in salzfreier Form eingesetzt werden. Salzfreie wässrige Lösungen von Vinylamineinheiten enthaltenden Homopolymerisaten können beispielsweise aus den oben beschriebenen salzhaltigen Hydrolysegemischen mit Hilfe einer Ultrafiltration an geeigneten Membranen bei Trenngrenzen von beispielsweise 1000 bis 500000 Dalton, vorzugsweise 10000 bis 300000 Dalton hergestellt werden.

Aus Kostengründen und in der Regel ohne nennenswerte Einbußen bei den mechanischen Eigenschaften der Formkörper werden häufig die Vinylamineinheiten enthaltenden Homopolymerisate in ihrer salzhaltigen Form (d.h. die aus der Hydrolyse der entsprechenden N-Vinylcarbonsäureamide enthaltenden Homopolymerisate resultierenden und nicht weiter aufgearbeiteten Gemische) eingesetzt.

Typische Vertreter der Vinylamineinheiten enthaltenden Homopolymerisate sind unter den Handelsnamen Catiofast^{®} VFH, Catiofast^{®} VSH und Catiofast^{®} VMP bzw. Lupamin^{®} 5095, Lupamin^{®} 9095 und Lupamin^{®} 1595 der BASF SE bekannt.

Mit besonderem Vorteil weisen die Polyamine A mehr als 2 primäre Aminogruppen, beispielsweise ≥ 3, ≥ 4, ≥ 5, ≥ 6, ≥ 7, ≥ 8, ≥ 9 oder sogar ≥ 10 primäre Aminogruppen pro Mol, insbesondere ≥ 5 oder insbesondere vorteilhaft sogar ≥ 10 primäre Aminogruppen pro Mol auf.

Erfindungsgemäß vorteilhaft werden Polyamine A eingesetzt, welche bei 20 °C und 1 atm (= 1,013 bar absolut = Atmosphärendruck) eine Löslichkeit ≥ 5 g, besonders vorteilhaft ≥ 10 g und insbesondere vorteilhaft ≥ 20 g pro 100 g entionisiertes Wasser aufweisen.

Selbstverständlich können erfindungsgemäß auch Gemische verschiedener Polyamine A eingesetzt werden.

Als Polyamin A bevorzugt ist ein Vinylamineinheiten enthaltendes Homopolymerisat eines Vinylcarbonsäureamids, bevorzugt Vinylformamid, mit einem Hydrolysegrad ≥ 50 mol-%, bevorzugt ≥ 85 mol-% und insbesondere bevorzugt 100 mol-% und/oder ein Polyethylenimin mit verzweigter Struktur.

Essentieller Bestandteil der erfindungsgemäß eingesetzten wässrigen Bindemittelzusammensetzung ist neben wenigstens einem Polyamin A wenigstens eine Saccharidverbindung S.

Im Rahmen dieser Schrift werden unter einer Saccharidverbindung S Monosaccharide, Oligosaccharide und/oder Polysaccharide sowie Substitutionsprodukte und Derivate der vorgenannten Verbindungen verstanden.

Dabei handelt es sich bei den Monosacchariden um organische Verbindungen der allgemeinen Formel CₙH₂ₙOₙ, wobei n für eine ganze Zahl 5, 6, 7, 8 oder 9 steht. Diese Monosaccharide werden auch als Pentosen, Hexosen, Heptosen, Octosen oder Nonosen bezeichnet, wobei sich diese Verbindungen in die entsprechenden Aldosen, welche eine Aldehydgruppe, bzw. Ketosen, welche eine Ketogruppe aufweisen, untergliedern lassen. Entsprechend umfassen die Monosaccharide Aldo- oder Ketopentosen, -hexosen, -heptosen, -octosen oder -nonosen. Erfindungsgemäß bevorzugte Monosaccharidverbindungen sind die auch in der Natur vorkommenden Pentosen und Hexosen, wobei Glucose, Mannose, Galactose, Fructose, Ribose und/oder Xylose insbesondere bevorzugt sind. Selbstverständlich sind erfindungsgemäß auch alle Stereoisomeren aller vorgenannten Monosaccaride mit umfasst.

Bekannt ist, dass die vorgenannten Monosaccharide in Form ihrer Halbacetale bzw. -ketale, gebildet aus einer Hydroxygruppe und der Aldehyd- bzw. Ketogruppe vorliegen, wobei in der Regel ein fünf- oder sechsgliedriger Ring gebildet wird. Reagiert nun eine Hydroxygruppe (aus der Halbacetal- bzw. Halbketalgruppe oder aus der Kohlenstoffgerüstkette) des einen Monosaccaridmoleküls mit der Halbacetal- bzw. Halbketalgruppe eines anderen Monosaccharidmoleküls unter Wasserabspaltung und Ausbildung einer Acetal- bzw. Ketalgruppe (eine solche Bindung wird auch glykosidische Verbindung genannt) so werden Disaccharide (mit der allgemeinen Summenformel CₙH₂ₙ₋₂Oₙ₋₁) erhalten. Des Weiteren kann ein solches Disaccharid mit einem weiteren Monosaccharid unter Wasserabspaltung zu einem Trisaccharid reagieren. Durch weitere Umsetzungen mit Monosacchariden werden Tetrasaccharide, Pentasaccharide, Hexasaccharide, Heptasaccharide, Octasaccharide, Nonasaccharide oder Decasaccharide erhalten. Verbindungen, welche aus wenigstens zwei aber maximal zehn Monosaccharidstruktureinheiten über glykosidische Verbindungen aufgebaut sind, werden als Oligosaccharide bezeichnet. Bevorzugte Oligosaccharide sind die Disaccharide, worunter die Lactose, Maltose und/oder Saccharose besonders bevorzugt sind. Selbstverständlich sollen erfindungsgemäß auch alle Stereoisomeren aller vorgenannten Oligosaccharide mit umfasst sein.

Saccharidverbindungen, welche aus mehr als zehn Monosaccharidstruktureinheiten aufgebaut sind, werden im Rahmen dieser Schrift als Polysaccharidverbindungen bezeichnet. Dabei können die Polysaccharidverbindungen aus den Strukturelementen eines Monosaccharids (sogenannte Homoglycane) oder den Strukturelementen von zwei oder mehreren verschiedenen Monosacchariden (sogenannte Heteroglycane) aufgebaut sein. Erfindungsgemäß bevorzugt werden Homoglycane eingesetzt.

Unter den Homoglycanen sind die Stärken, welche aus α-D-Glucoseeinheiten aufgebaut sind, insbesondere bevorzugt. Die Stärken bestehen aus den Polysacchariden Amylose (D-Glucoseeinheiten, welche α-1,4-glycosidisch miteinander verbunden sind) und Amylopektin (D-Glucoseeinheiten, welche α-1,4- und zusätzlich zu ca. 4 % α-1,6-glycosidisch miteinander verbunden sind). Üblicherweise enthält natürlich vorkommende Stärke ca. 20 bis 30 Gew.-% Amylose und ca. 70 bis 80 Gew.-% Amylopektin. Durch Züchtung und variierend nach Pflanzenart kann das Verhältnis zwischen Amylose und Amylopektin aber verändert sein. Als Stärken eignen sich alle nativen Stärken, wie beispielsweise Stärken aus Mais, Weizen, Hafer, Gerste, Reis, Hirse, Kartoffeln, Erbsen, Tapioka oder Sago. Von Interesse sind außerdem solche natürlichen Stärken, die einen hohen Amylopektingehalt aufweisen wie Wachsmaisstärke und Wachskartoffelstärke. Der Amylopektingehalt dieser Stärken beträgt ≥ 90 Gew.-%, oft ≥ 95 und ≤ 100 Gew.-%.

Selbstverständlich umfasst der Begriff Saccharidverbindung S auch die Substitutionsprodukte und Derivate der vorgenannten Mono-, Oligo- und Polysaccharidverbindungen, wobei jedoch solche Saccharidverbindungen ausgenommen sein sollen, welche ≥ 2 primäre Aminogruppen aufweisen.

Dabei versteht man unter den Substitutionsprodukten einer Saccharidverbindung S solche, bei denen wenigstens eine Hydroxygruppe der Saccharidverbindung S unter Aufrechterhaltung der Saccharidstruktur funktionalisiert wurde, beispielsweise durch Veresterung, Veretherung, Oxidation etc. Dabei erfolgt die Veresterung beispielsweise durch Umsetzung der Saccharidverbindung S mit anorganischen oder organischen Säuren, deren Anhydriden oder Halogeniden. Von besonderem Interesse sind phosphatierte und acetylierte Saccharidverbindungen. Die Veretherung erfolgt in der Regel durch Umsetzung der Saccharidverbindungen mit organischen Halogenverbindungen, Epoxiden oder Sulfaten in wässriger alkalischer Lösung. Bekannte Ether sind Alkylether, Hydroxyalkylether, Carboxyalkylether und Allylether. Die Oxidation wenigstens einer Hydroxygruppe mittels eines in der organischen Kohlehydratchemie üblichen Oxidationsmittels, wie beispielsweise Salpetersäure, Wasserstoffperoxid, Ammoniumpersulfat, Peroxyessigsäure, Natriumhypochlorit und/oder 2,2,6,6-Tetramethyl-1-piperidinyloxy (TEMPO) entsteht die entsprechende Ketoverbindung (bei Oxidation einer sekundären Hydroxygruppe), bzw. Carboxylverbindung (bei Oxidation einer primären Hydroxygruppe).

Unter Derivaten von Saccharidverbindungen S werden solche Reaktionsprodukte von Oligo- und Polysacchariden verstanden, welche unter Spaltung wenigstens einer Acetal- bzw. Ketalgruppe (d.h. wenigstens einer glycosidischen Bindung) und daher unter Abbau der ursprünglichen Saccharidstruktur erhalten werden. Solche Abbaureaktionen sind dem Fachmann geläufig und erfolgen insbesondere dadurch, dass man eine Oligo- oder Polysaccharidverbindung thermischen, enzymatischen, oxidativen und/oder hydrolytischen Bedingungen aussetzt.

Mit Vorteil werden als Saccharidverbindung S Stärke, Cellulose, Guaran, Xanthan, Alginat, Pectin, Chitosan, Gummi Arabicum, Carrageen, Agar und/oder Gellan sowie Substitutionsprodukte oder Derivate hiervon eingesetzt.

Mit besonderem Vorteil werden jedoch Stärken und/oder Stärkederivate bzw. deren Substitutionsprodukte eingesetzt, wobei Maltodextrin und/oder Glucosesirup insbesondere bevorzugt sind.

Eine in der betrieblichen Praxis sehr geläufige Größe zur Charakterisierung des Abbaugrades von Stärken ist der DE-Wert. Dabei steht DE für Dextrose Equivalent und bezeichnet den prozentualen Anteil reduzierender Zucker an der Trockensubstanz. Der DE-Wert entspricht daher der Menge an Glucose (= Dextrose) in Gramm, die je 100 g Trockensubstanz das gleiche Reduktionsvermögen hätte. Der DE-Wert ist ein Maß dafür, wie weit der Polymerabbau erfolgt ist. Daher erhalten Stärken mit niedrigem DE-Wert einen hohen Anteil an Polysacchariden und einen niedrigen Gehalt an niedermolekularen Mono- und Oligosacchariden, während Stärken mit hohem DE-Wert hauptsächlich aus niedermolekularen Mono- oder Disacchariden bestehen. Die im Rahmen der vorliegenden Erfindung bevorzugten Maltodextrine weisen DE-Werte im Bereich von 3 bis 30 und gewichtsmittlere Molekulargewichte von 15000 bis 30000 g/mol auf. Ein im Rahmen der vorliegenden Erfindung ebenfalls bevorzugter Glucosesirup weist DE-Werte von 20 bis 35 auf. Herstellungsbedingt fallen diese Produkte in Form wässriger Lösungen an und werden daher in der Regel auch als solche in den Handel gebracht. Geeignete Lösungen von Maltodextrinen weisen Feststoffgehalte von 50 bis 70 Gew.-%, geeignete Lösungen von Glucosesirup Feststoffgehalte von 70 bis 95 Gew.-% auf. Insbesondere Maltodextrine sind jedoch auch in sprühgetrockneter Form als Pulver erhältlich. Erfindungsgemäß bevorzugt sind auch, modifizierte abgebaute Stärken, welche DE-Werte von 1 bis 3 und gewichtsmittlere Molekulargewichte von 100000 bis 1000000 g/mol aufweisen und üblicherweise als Feststoff erhältlich sind.

Die Saccharidverbindung S weist in der Regel ein Molekulargewicht (bei Mono-, Di- oder Trisacchariden) bzw. gewichtsmittleres Molekulargewicht (bei höheren Oligo- und Polysacchariden) im Bereich ≥ 150 und ≤ 5000000 g/mol, oft im Bereich ≥ 180 und ≤ 100000 g/mol und häufig im Bereich ≥ 180 und ≤ 30000 g/mol auf.

Bevorzugt ist, wenn die erfindungsgemäß verwendete Saccharidverbindung S eine Löslichkeit von ≥ 10 g, vorteilhaft ≥ 50 g und insbesondere vorteilhaft ≥ 100 g pro Liter entionisiertem Wasser bei 20 °C und Atmosphärendruck aufweist. Erfindungsgemäß sind jedoch auch Ausführungsformen mit umfasst, deren Saccharidverbindung S eine Löslichkeit < 10 g pro Liter entionisiertem Wasser bei 20 °C und Atmosphärendruck aufweist. Abhängig von der Menge dieser eingesetzten Saccharidverbindungen S, können diese dann auch in Form ihrer wässrigen Suspension vorliegen. Werden erfindungsgemäß Saccharidverbindungen S in Art und Menge so eingesetzt, dass sie in wässriger Suspension vorliegen, so ist es vorteilhaft, wenn die in wässrigem Medium suspendierten Partikel der Saccharidverbindung S einen mittleren Teilchendurchmesseer ≤ 5 µm, bevorzugt ≤ 3 µm und insbesondere bevorzugt ≤ 1 µm aufweisen. Die Bestimmung der mittleren Teilchendurchmesser erfolgt wie bei den wässrigen Polymerisat P-Dispersionen über die Methode der quasielastischen Lichtstreuung (ISO-Norm 13 321).

Erfindungsgemäß vorteilhaft wird als wenigstens eine Saccharidverbindung S Glucose, Mannose, Galactose, Xylose, Fructose, Ribose, Lactose, Maltose, Saccharose, Maltodextrin und/oder Glucosesirup eingesetzt, wobei jedoch Glucose, Fructose, Maltose, Maltodextrin und/oder Glucosesirup und insbesondere Glucose und/oder Glucosesirup besonders bevorzugt sind.

Selbstverständlich können erfindungsgemäß auch Gemische verschiedener Saccharidverbindungen S eingesetzt werden.

Im erfindungsgemäß eingesetzten wässrigen Bindemittel beträgt das Gewichtsverhältnis des wenigstens einen Polyamins A zur wenigstens einen Saccharidverbindung S 1:99 bis 80:20, vorteilhaft 5:95 bis 50:50 und insbesondere vorteilhaft 10:90 bis 35:65.

Das erfindungsgemäß eingesetzte wässrige Bindemittel wird hergestellt, indem das wenigstens eine Polyamin A und die wenigstens eine Saccharidverbindung S im wässrigen Medium bei 20 bis 25 °C (Raumtemperatur) oder bei höherer Temperatur miteinander gemischt werden, Dabei ist in der Regel die Reihenfolge der Zugaben unerheblich.

Die erfindungsgemäß eingesetzten wässrigen Bindemittel haben in der Regel einen Feststoffgehalt im Bereich von ≥ 1 und ≤ 70 Gew.-%, bezogen auf die Summe der Gesamtmengen an Polyamin A und Saccharidverbindung S. Werden die erfindungsgemäß eingesetzten Bindemittel zum Binden von Glasfasern oder Glasfaservliesen eingesetzt, so beträgt ihr Feststoffgehalt vorteilhaft ≥ 5 und ≤ 40 Gew.-% und insbesondere vorteilhaft ≥ 10 und ≤ 30 Gew.-%, während die erfindungsgemäß eingesetzten Bindemitteln zum Binden von Glas- oder Steinwolle vorteilhaft einen Feststoffgehalt ≥ 1 und ≤ 15 Gew.-% und insbesondere vorteilhaft ≥ 2 und ≤ 8 Gew.-% aufweisen, wobei sich die Feststoffgehalte jeweils auf die Summe der Gesamtmengen an Polyamin A und Saccharidverbindung S beziehen.

Auch weisen die erfindungsgemäß eingesetzten wässrigen Bindemittel in der Regel einen pH-Wert im Bereich ≥ 4 und ≤ 12, vorteilhaft ≥ 5 und ≤ 12 und insbesondere vorteilhaft ≥ 6 und ≤ 11 auf. Dabei erfolgt die pH-Wertmessung bei Raumtemperatur mit einem 5 gew.-%igen (bezogen auf die Summe der Gesamtmengen an Polyamin A und Saccharidverbindung S) wässrigen Bindemittel mit einem geeichten pH-Meter. Die Einstellung der pH-Werte ist dem Fachmann geläufig und erfolgt mittels anorganischen oder organischen Säuren und Basen, wie insbesondere verdünnte Schwefelsäure oder wässrige Natrium- oder Kalilauge.

Wesentlich ist ferner, dass das erfindungsgemäß eingesetzte wässrige Bindemittel neben dem Polyamin A und der Saccharidverbindung S als essentielle Komponenten optional noch weitere, dem Fachmann in Art und Menge geläufige Komponenten, wie beispielsweise Verdicker, Pigmentverteiler, Dispergiermittel, Emulgatoren, Haftvermittler, Feuchthaltemittel (beispielsweise Glyzerin), Puffersubstanzen, Neutralisationsmittel, Biozide, Entschäumer oder organische Lösungsmittel enthalten kann.

Erfindungsgemäß beträgt die Gesamtmenge der neben dem Polyamin A und der Saccharidverbindung S im wässrigen Bindemittel vorliegenden organischen Verbindungen ≤ 30 Gew.-%, bevorzugt ≤ 10 Gew.-% und insbesondere vorteilhaft ≥ 5 Gew.-%, jeweils bezogen auf die Summe der Gesamtmengen an Polyamin A und Saccharidverbindung S, wobei jedoch die bei der Herstellung der Vinylamineinheiten enthaltenden Homo- und Copolymerisate durch Hydrolyse der entsprechenden Vinylcarbonsäureeinheitenden enthaltenden Homo- und Copolymerisate erhaltenen organischen Nebenprodukte (direkte Hydrolyseprodukte), wie beispielsweise Alkalimetallformiate oder Alkalimetallacetate bei den vorgenannten Mengenangaben nicht enthalten sein sollen.

Mineralfasern sind dem Fachmann geläufig. Beispielsweise handelt es sich hierbei um Glasfasern, Glas- oder Steinwolle. Selbstverständlich soll der Begriff Mineralfasern auch die aus den Mineralfasern erhältlichen Faservliese, wie beispielsweise so genannte mechanisch verfestigte, beispielsweise genadelte oder chemisch vorgebundene Faservliese mit umfassen.

Erfindungsgemäß umfasst ist auch ein Verfahren zur Herstellung eines Formkörpers aus Mineralfasern, welches dadurch gekennzeichnet ist, dass ein wässriges Bindemittel enthaltend als wirksame Bestandteile
a) wenigstens ein Polyamin A, und
b) wenigstens eine Saccharidverbindung S, wobei
c) das Gewichtsverhältnis des wenigstens einen Polyamins A zur wenigstens einen Saccharidverbindung S 1:99 bis 80:20 beträgt, und
d) wobei die Gesamtmenge der neben dem Polyamin A und Saccharidverbindung S im wässrigen Bindemittel vorliegenden organischen Verbindungen ≤ 30 Gew.-%, bezogen auf die Summe der Gesamtmengen an Polyamin A und Saccharidverbindung S, beträgt,
auf die Mineralfasern aufgebracht wird, gegebenenfalls die mit dem wässrigen Bindemittel behandelten Mineralfasern in Form gebracht werden und anschließend die so behandelten Mineralfasern einem thermischen Behandlungsschritt bei einer Temperatur ≥ 110 °C unterzogen werden.

Das Verfahren zur Herstellung eines Formkörpers aus Mineralfasern und des erfindungsgemäß eingesetzten wässrigen Bindemittels erfolgt vorteilhaft dergestalt, dass das wässrige Bindemittel auf die Mineralfasern aufgebracht wird (Imprägnierung), gegebenenfalls die mit der wässrigen Bindemittelzusammensetzung behandelten (imprägnierten) Mineralfasern in Form gebracht werden und anschließend die so erhaltenen Mineralfasern einem thermischen Behandlungsschritt bei einer Temperatur ≥ 110 °C, vorteilhaft ≥ 150 °C und insbesondere vorteilhaft ≥ 170 °C und ≤ 250 °C, vorteilhaft ≤ 220 °C unterzogen werden, wobei das Polyamin A und die Saccharidverbindung S miteinander unter Wasserabspaltung und Aushärtung abreagieren.

Wesentlich ist, dass die essentiellen Komponenten des erfindungsgemäß eingesetzten wässrigen Bindemittels, d.h. das Polyamin A und die Saccharidverbindung S, insbesondere in Form ihrer wässrigen Lösungen oder Suspensionen, vorab des Aufbringens auf die Mineralfasern, homogen gemischt werden können. Es ist aber auch möglich, diese beiden Komponenten erst unmittelbar vor dem Aufbringen, beispielsweise mit einer statischen und/oder dynamischen Mischeinrichtung zu mischen. Selbstverständlich ist es auch möglich, zuerst eine wässrige Lösung oder Suspension des Polyamins A und danach die wässrige Lösung oder Suspension der Saccharidverbindung S auf die Mineralfasern aufzubringen, wobei die Mischung auf den Mineralfasern erfolgt. In analoger Weise kann aber auch zuerst die wässrige Lösung oder Suspension der Saccharidverbindung S und danach die wässrige Lösung oder Suspension des Polyamins A auf die Mineralfasern aufgebracht werden. Selbstverständlich sollen auch Mischformen des Aufbringens der beiden essentiellen Komponenten erfindungsgemäß umfasst sein.

Die Imprägnierung der Mineralfasern erfolgt in der Regel dergestalt, dass das wässrige Bindemittelmittel gleichmäßig auf die Oberfläche der Mineralfasern aufgebracht wird. Dabei wird die Menge an wässrigem Bindemittel so gewählt, dass pro 100 g Mineralfasern ≥ 1 und ≥ 100 g, bevorzugt ≥ 2 und ≤ 50 g und insbesondere bevorzugt ≥ 3 und ≤ 30 g Bindemittel (berechnet als Summe der Gesamtmengen von Polyamin A und Saccharidverbindung S auf Feststoffbasis) eingesetzt werden. Die Imprägnierung der Mineralfasern ist dem Fachmann geläufig und erfolgt beispielsweise durch Tränkung oder durch Besprühen der Mineralfasern mit dem erfindungsgemäß eingesetzten wässrigen Bindemittel.

Nach der Imprägnierung werden die Mineralfasern gegebenenfalls in die gewünschte Form gebracht, beispielsweise durch Einbringen in eine beheizbare Presse oder Form. Daran anschließend werden die in Form gebrachten imprägnierten Mineralfasern in einer dem Fachmann geläufigen Art und Weise getrocknet und unter Wasserabspaltung und -abtrennung ausgehärtet.

Häufig erfolgt die Trocknung bzw. Aushärtung der gegebenenfalls in Form gebrachten Mineralfasern in zwei Temperaturstufen, wobei die Trocknungsstufe bei einer Temperatur < 100 °C, bevorzugt ≥ 20 und ≤ 90 °C und insbesondere bevorzugt ≥ 40 und ≤ 80 °C und die Aushärtungsstufe bei einer Temperatur ≥ 110 °C, bevorzugt ≥ 150 und ≤ 250 °C und insbesondere bevorzugt ≥ 170 und ≤ 220 °C erfolgt. Nach der Trocknungsstufe sind die imprägnierten Mineralfasern noch thermoplastisch und sind bei Erwärmung auf eine Temperatur ≥ 50 und ≤ 100 °C noch verformbar. Nach der Aushärtungsstufe unter Wasserabspaltung und -abtrennung weisen die behandelten Mineralfasern in der Regel ein duroplastisches Verhalten auf.

Selbstverständlich ist es aber auch möglich, dass die Trocknungsstufe und die Aushärtungsstufe der Formkörper in einem Arbeitsschritt, beispielsweise in einer Formpresse erfolgen.

Für das erfindungsgemäße Verfahren werden Mineralfasern, insbesondere Glasfasern bzw. Glasfaservliese eingesetzt.

Die nach dem erfindungsgemäßen Verfahren zugänglichen Formkörper weisen vorteilhafte Eigenschaften, insbesondere eine verbesserte Nassreißkraft bzw. eine verbesserte Wasserbeständigkeit auf. Des Weiteren kann bei der Verwendung des erfindungsgemäß eingesetzten wässrigen Bindemittels zum Binden von Glasfasern, Glasfaservliesen, Glas- oder Steinwolle auf die sonst üblichen Haftvermittler, wie beispielsweise Silan- bzw. Siloxanverbindungen, verzichtet werden, ohne dass es zu Einbußen auf die mechanischen Eigenschaften der erhaltenen Formkörper kommt.

### Beispiele

### I. Herstellung der Bindemittelflotten

### Einsatzstoffe:

| | |
|---|---|
| Polyamin1 (P1): | wässrige Lösung von Polyvinylamin, Mw: 330000 g/mol, Hydrolysegrad 100 %, Polymerfeststoffgehalt: 9 Gew.-% |
| Polyamin 2 (P2): | wässrige Lösung von Polyvinylamin, Mw: 48000 g/mol, Hydrolysegrad 100 %, Polymerfeststoffgehalt: 10 Gew.-% |
| Polyamin 3 (P3): | wässrige Lösung von Polyvinylamin, Mw: 1200 g/mol, Hydrolysegrad 100 %, Polymerfeststoffgehalt: 10 Gew.-% |
| Polyamin 4 (P4): | Polyethylenimin, Mw: 800 g/mol, Ladungsdichte: 16 meq/g, ≥ 99 Gew.-% |
| Polyamin 5 (P5): | wässrige Lösung von Polyethylenimin, Mw:1300 g/mol, Ladungsdichte: 16 meq/g, Polymerfeststoffgehalt: 50 Gew.-% |
| Polyamin 6 (P6): | wässrige Lösung von Polyethylenimin, Mw: 2000 g/mol, Ladungsdichte: 16 meq/g, Polymerfeststoffgehalt: 50 Gew.-% |
| Polyamin 7 (P7): | wässrige Lösung von Polyethylenimin, Mw: 5000 g/mol, Ladungsdichte: 17 meq/g, Polymerfeststoffgehalt: 50 Gew.-% |
| Polyamin 8 (P8): | wässrige Lösung von Polyethylenimin, Mw: 750000 g/mol, Ladungsdichte: 20 meq/g, Polymerfeststoffgehalt: 33 Gew.-% |
| | |
| Saccharidverbindung 1 (S1): | 72 gew.-%ige wässrige Lösung einer hydrolytisch abgebauten Stärke mit einem DE-Wert von 26 bis 32 (C*Sweet 01403 der Firma Cargill GmbH) |
| Saccharidverbindung 2 (S2): | 50 gew.-%ige wässrige Lösung von Glucosemonohydrat (Glucosemonohydrat der Firma Sigma Aldrich Chemie GmbH) |
| Saccharidverbindung 3 (S3): | Fructosemonohydrat ≥ 99 Gew.-%, Sigma Aldrich Chemie GmbH |
| Saccharidverbindung 4 (S4): | Maltosemonohydrat ≥ 98 Gew.-%, Sigma Aldrich Chemie GmbH |
| Saccharidverbindung 5 (S5): | 50 gew.-%ige wässrige Lösung einer hydrolytisch abgebauten Stärke mit einem DE-Wert von 28 (Maltosweet^{®} 300, der Firma Tate and Lyle GmbH) |
| | |
| Vergleichsbindemittel V: | Acrodur^{®} DS 3530 der Firma BASF SE (50 gew.-%ige wässrige Lösung eines Gemisches bestehend aus einem Acrylsäure/Maleinsäure- Copolymerisat und Triethanolamin) |

### Herstellung der wässrigen Bindemittelflotten

Zur Herstellung der wässrigen Bindemittelflotten wurden bei 20 bis 25 °C (Raumtemperatur) jeweils 100 g entionisiertes Wasser und die in Tabelle 1 angegebenen Mengen der jeweiligen Polyamine P1 bis P8 in einem 5 I-Becherglas vorgelegt und dann unter Rühren die ebenfalls in Tabelle 1 angegebenen Mengen der jeweiligen Saccharidverbindungen S1 bis S5 zugegeben.

Zu diesen Lösungen wurden 0,3 g 3-Aminopropyltriethoxysilan (Silquest^{®} A-1100 Silane der Fa. Momentive Performance Materials) zugegeben und durch 10 minütiges Rühren homogen gemischt. Daran anschließend wurden die jeweiligen Lösungen durch Zugabe von entionisiertem Wasser auf einen Polymerfeststoffgehalt von 5 Gew.-% verdünnt. Die erhaltenen Lösungen werden als Bindemittelflotten A1 bis A22 bezeichnet. Bei den Bindemittelflotten A10 und A12 wurde durch Zugabe von 50 gew.-%iger wässriger Schwefelsäurelösung ein pH Wert von 4 und bei den Bindemittelflotte A11 und A13, wurde durch Zugabe von 50 gew.-%iger wässriger Natronlaugelösung ein pH Wert von 11 eingestellt.

Die Vergleichsflotten V1 bis V3 wurden erhalten indem 180,0 g des Vergleichsbindemittels V in einem 5 I-Becherglas vorgelegt und dann 0,3 g 3-Aminopropyltriethoxysilan zugegeben und durch 10 minütiges Rühren homogen gemischt wurden. Daran anschließend wurden die jeweiligen Lösungen durch Zugabe von entionisiertem Wasser auf einen Polymerfeststoffgehalt von 5 Gew.-% verdünnt. Bei der Vergleichsflotte V2 wurde durch Zugabe von 50 gew.-%iger wässriger Schwefelsäurelösung ein pH Wert von 4 und bei der Bindemittelflotte V3 wurde durch Zugabe von 50 gew.-%iger wässriger Natronlaugelösung ein pH Wert von 11 eingestellt.

**Tabelle 1: Zusammensetzung der Bindemittelflotten**

| Bindemittelflotte | Polyamin | Saccharid | |
|---|---|---|---|
| A1 | 100,0 g P1 | 112,5 g S1 | |
| A2 | 200,0 g P1 | 100,0 g S1 | |
| A3 | 400,0 g P1 | 50,0 g S1 | |
| A4 | 200,0 g P1 | 144,0 g S2 | |
| A5 | 200,0 g P1 | 73,0 g S3 | |
| A6 | 200,0 g P1 | 73,0 g S4 | |
| A7 | 200,0 g P1 | 144,0 g S5 | |
| A8 | 200,0 g P2 | 111,1 g S1 | |
| A9 | 200,0 g P3 | 111,1 g S1 | |
| A10 | 100,0 g P1 | 112,5 g S1 | (pH 4) |
| A11 | 100,0 g P1 | 112,5 g S1 | (pH 11) |
| A12 | 200,0 g P1 | 100,0 g S1 | (pH 4) |
| A13 | 200,0 g P1 | 100,0 g S1 | (pH 11) |
| A14 | 18,2 g P5 | 100,0 g S1 | |
| A15 | 36,0 g P6 | 100,0 g S1 | |
| A16 | 36,0 g P7 | 100,0 g S1 | |
| A17 | 36,0 g P8 | 100,0 g S1 | |
| A18 | 54,5 g P9 | 100,0 g S1 | |
| A19 | 63,0 g P8 | 81,3 g S1 | |
| A20 | 18,0 g P8 | 162,0 g S2 | |
| A21 | 36,0 g P8 | 144,0 g S2 | |
| A22 | 63,0 g P8 | 117,0 g S2 | |

### II. Anwendungstechnische Untersuchungen

Zur Herstellung der Formkörper wurden Mikroglasfaservliese (27 cm x 28,5 cm) der Firma Whatman, Typ GF/A No. 1820-915 mit einem Flächengewicht von 54 g/m² eingesetzt.

### Herstellung der Prüfstreifen

Zum Aufbringen der Bindemittelflotten (Imprägnierung) wurden die Glasfaservliese in Längsrichtung über ein Endlos-PES-Siebband mit einer Bandlaufgeschwindigkeit von 60 cm pro Minute jeweils durch die vorgenannten 5 Gew.-%igen wässrigen Bindemittelflotten A1 bis A22 sowie V1 bis V3 geleitet. Durch anschließende Absaugung der wässrigen Bindemittelflotten wurde der Nassauftrag auf 216 g/m² (entsprechend 10,8 g/m² Bindemittel als Feststoff gerechnet) eingestellt. Die so erhaltenen imprägnierten Glasfaservliese wurden in einem Mathis-Ofen auf einen Kunststoffnetz als Träger für 3 Minuten bei 180 °C bzw. bei 200 °C bei maximalen Heißluftstrom getrocknet und ausgehärtet. Nach dem Abkühlen auf Raumtemperatur wurden Prüfstreifen mit einer Größe von 240 mm x 50 mm in Faserlängsrichtung ausgestanzt. Die erhaltenen Prüfstreifen wurden anschließend für 24 Stunden bei 23 °C und 50 % relativer Luftfeuchtigkeit im Klimaraum gelagert. Die in Abhängigkeit von den eingesetzten Bindemittelflotten A1 bis A22 sowie V1 bis V3 erhaltenen Glasfaservliesprüfstreifen werden im folgenden Prüfstreifen A1 bis A22 sowie V1 bis V3 bezeichnet.

### Bestimmung der Reißkraft "trocken" bei Raumtemperatur (= Trockenreißkraft; TRK)

Die Bestimmung der Reißkraft bei Raumtemperatur erfolgte an einer Zugprüfmaschine der Firma Zwick-Roell, Typ Z005. Die Prüfstreifen A1 bis A22 sowie V1 bis V3 wurden dabei so senkrecht eine Spannvorrichtung eingebracht, dass die freie Einspannlänge 200 mm betrug. Daran anschließend wurden die eingespannten Prüfstreifen mit einer Geschwindigkeit von 25 mm pro Minute in entgegen gesetzter Richtung bis zum Riss der Prüfstreifen auseinander gezogen. Je höher die zum Riss der Prüfstreifen erforderliche Kraft ist, desto besser ist die entsprechende Reißkraft zu bewerten. Es erfolgten jeweils 5 separate Messungen. Die in Tabelle 2 angegebenen TRK-Werte stellen jeweils den Mittelwert dieser Messungen dar.

### Bestimmung der Reißkraft "nass" bei 80 °C (= Nassreißkraft; NRK)

Zur Bestimmung der Nassreißkraft wurden die Prüfstreifen A1 bis A22 sowie V1 bis V3 für 15 Minuten bei 80 °C in entionisiertem Wasser gelagert und danach überschüssiges Wasser mit einem Baumwollgewebe abgetupft. Die Bestimmung der Nassreißkraft erfolgte an einer Zugprüfmaschine der Firma Zwick-Roell, Typ Z005. Die Prüfstreifen A1 bis A22 sowie V1 bis V3 wurden dabei so senkrecht eine Spannvorrichtung eingebracht, dass die freie Einspannlänge 160 mm betrug. Daran anschließend wurden die eingespannten Prüfstreifen mit einer Geschwindigkeit von 25 mm pro Minute in entgegen gesetzter Richtung bis zum Riss der Prüfstreifen auseinander gezogen. Je höher die zum Riss der Prüfstreifen erforderliche Kraft ist, desto besser ist die entsprechende Nassreißkraft zu bewerten. Es erfolgten jeweils 5 separate Messungen. Die in Tabelle 2 angegebenen NRK-Werte stellen jeweils den Mittelwert dieser Messungen dar.

### Bestimmung der Reißkraft bei 180°C (= Heißreißkraft; HRK)

Die Bestimmung der Reißkraft bei 180 °C erfolgte in der Zugprüfmaschine Zwick-Roell, Typ Z 010 TH2 A. Die Prüfstreifen A1 bis A22 sowie V1 bis V3 wurden dabei so senkrecht in eine Spannvorrichtung eingebracht, dass die freie Einspannlänge 240 mm betrug. Die Bestimmung der Reißkraft erfolgte dabei dergestalt, dass die Prüfstreifen A1 bis A22 sowie V1 bis V3 zuerst für 60 Sekunden bei 180 °C temperiert und dann bei dieser Temperatur mit einer Geschwindigkeit von 25 mm pro Minute in entgegen gesetzter Richtung bis zum Riss der Prüfstreifen auseinander gezogen wurden. Es erfolgten jeweils 5 Messungen. Die ebenfalls in Tabelle 2 angegebenen HRK-Werte stellen jeweils den Mittelwert dieser Messungen dar.

**Tabelle 2: Zusammenfassung der Reißkraftergebnisse [Wertangaben jeweils in N/50mm]**

| | TRK | | NRK | | HRK | |
|---|---|---|---|---|---|---|
| Prüfstreifen | 180 °C | 200 °C | 180 °C | 200 °C | 180 °C | 200 °C |
| V1 | 109 | 99 | 60 | 90 | 104 | 104 |
| V2 | 103 | 97 | 32 | 54 | 101 | 103 |
| V3 | 40 | 31 | 3 | 4 | 71 | 75 |
| A1 | 100 | 103 | 37 | 40 | 97 | 109 |
| A2 | 108 | 98 | 57 | 60 | 103 | 99 |
| A3 | 106 | 112 | 62 | - | 111 | 100 |
| A4 | 98 | 90 | 70 | - | 101 | 92 |
| A5 | 90 | 91 | 64 | - | 97 | 93 |
| A6 | 92 | 91 | 70 | - | 103 | 102 |
| A7 | 91 | 97 | 53 | - | 100 | 102 |
| A8 | 98 | 101 | 64 | 73 | 104 | 112 |
| A9 | 86 | 93 | 46 | 56 | 94 | 101 |
| A10 | - | - | 37 | 41 | - | - |
| A11 | - | - | 45 | 47 | - | - |
| A12 | - | - | 56 | 61 | - | - |
| A13 | - | - | 62 | 68 | - | - |
| A14 | - | 108 | - | - | - | 106 |
| A15 | - | 104 | - | - | - | 106 |
| A16 | - | 107 | 62 | - | - | 98 |
| A17 | 98 | 99 | 47 | 54 | 95 | 98 |
| A18 | - | 97 | - | - | - | 93 |
| A19 | 101 | 104 | 57 | 59 | 97 | 93 |
| A20 | - | 112 | - | 71 | - | 102 |
| A21 | 115 | 112 | 73 | 79 | 106 | 105 |
| A22 | 119 | 110 | 74 | 78 | 101 | 107 |

Aus den Ergebnissen ist klar ersichtlich, dass die erfindungsgemäß eingesetzten wässrigen Bindemittel ähnliche oder bessere Reißkraftergebnisse als die Bindemittelsysteme des Standes der Technik aufweisen.

## Patentansprüche

1. Verwendung eines wässrigen Bindemittels, enthaltend als wirksame Bestandteile
a) wenigstens ein Vinylamineinheiten enthaltendes Homopolymerisat eines Vinylcarbonsäureamids mit einem Hydrolysegrad ≥ 50 mol-% und/oder ein Polyethylenimin mit verzweigter Struktur [Polyamin A], und
b) wenigstens eine Saccharidverbindung S, wobei
c) das Gewichtsverhältnis des wenigstens einen Polyamins A zur wenigstens einen Saccharidverbindung S 1:99 bis 80:20 beträgt, und
d) wobei die Gesamtmenge der neben dem Polyamin A und Saccharidverbindung S im wässrigen Bindemittel vorliegenden organischen Verbindungen ≤ 30 Gew.-%, bezogen auf die Summe der Gesamtmengen an Polyamin A und Saccharidverbindung S, beträgt,
zur Herstellung von Formkörpern aus Mineralfasern.

2. Verwendung nach Anspruch 1, wobei als Saccharidverbindungen S Monosaccharide, Oligosaccharide und/oder Polysaccharide sowie deren Substitutionsprodukte oder Derivate eingesetzt werden.

3. Verwendung nach Anspruch 1 oder 2, wobei als wenigstens eine Saccharidverbindung S Glucose, Mannose, Galactose, Xylose, Fructose, Ribose, Lactose, Maltose, Saccharose, Maltodextrin und/oder Glucosesirup eingesetzt wird.

4. Verwendung nach einem der Ansprüche 1 bis 3, wobei das Gewichtsverhältnis des wenigstens einen Polyamins A zur wenigstens einen Saccharidverbindung S 5:95 bis 50:50 beträgt.

5. Verwendung nach einem der Ansprüche 1 bis 4, wobei der pH-Wert im Bereich des wässrigen Bindemittels ≥ 6 und ≤ 11 liegt.

6. Verwendung nach einem der Ansprüche 1 bis 5, wobei der Feststoffgehalt ≥ 1 und ≤ 70 Gew.-%, bezogen auf die Summe der Gesamtmengen an Polyamin A und Saccharidverbindung S, beträgt.

7. Verfahren zur Herstellung eines Formkörpers aus Mineralfasern, **dadurch gekennzeichnet, dass** ein wässriges Bindemittel enthaltend als wirksame Bestandteile
a) wenigstens ein Polyamin A, und
b) wenigstens eine Saccharidverbindung S, wobei
c) das Gewichtsverhältnis des wenigstens einen Polyamins A zur wenigstens einen Saccharidverbindung S 1:99 bis 80:20 beträgt, und
d) wobei die Gesamtmenge der neben dem Polyamin A und Saccharidverbindung S im wässrigen Bindemittel vorliegenden organischen Verbindungen ≤ 30 Gew.-%, bezogen auf die Summe der Gesamtmengen an Polyamin A und Saccharidverbindung S, beträgt,
auf die Mineralfasern aufgebracht wird, gegebenenfalls die mit dem wässrigen Bindemittel behandelten Mineralfasern in Form gebracht werden und anschließend die so behandelten Mineralfasern einem thermischen Behandlungsschritt bei einer Temperatur ≥ 110 °C unterzogen werden.

8. Verfahren nach Anspruch 7, **dadurch gekennzeichnet, dass** pro 100 g Mineralfasern ≥ 1 und ≤ 100 g Bindemittel (berechnet als Summe der Gesamtmengen an Polyamin A und Saccharidverbindung S auf Feststoffbasis) eingesetzt werden.

9. Verfahren nach Anspruch 7 oder 8, **dadurch gekennzeichnet, dass** der thermische Behandlungsschritt bei einer Temperatur im Bereich ≥ 150 und ≤ 250 °C erfolgt

10. Formkörper erhältlich nach einem Verfahren gemäß einem der Ansprüche 7 bis 9.

## Claims

1. The use of an aqueous binder comprising, as active constituents,
a) at least one homopolymer, containing vinylamine units, of a vinylcarboxamide with a hydrolysis level of ≥ 50 mol% and/or a polyethyleneimine with branched structure [polyamine A], and
b) at least one saccharide compound S,
c) the weight ratio of the at least one polyamine A to the at least one saccharide compound S being 1:99 to 80:20, and
d) the total amount of the organic compounds present alongside the polyamine A and saccharide compound S in the aqueous binder being ≤ 30% by weight, based on the sum of the total amounts of polyamine A and saccharide compound S,
for producing shaped articles from mineral fibers.

2. The use according to claim 1, wherein the saccharide compounds S used are monosaccharides, oligosaccharides and/or polysaccharides, and the substitution products or derivatives thereof.

3. The use according to claim 1 or 2, wherein the at least one saccharide compound S used is glucose, mannose, galactose, xylose, fructose, ribose, lactose, maltose, sucrose, maltodextrin and/or glucose syrup.

4. The use according to any of claims 1 to 3, wherein the weight ratio of the at least one polyamine A to the at least one saccharide compound S is 5:95 to 50:50.

5. The use according to any of claims 1 to 4, wherein the pH is in the range of the aqueous binder of ≥ 6 and ≤ 11.

6. The use according to any of claims 1 to 5, wherein the solids content is ≥ 1 and ≤ 70% by weight, based on the sum of the total amounts of polyamine A and saccharide compound S.

7. A process for producing a shaped article from mineral fibers, which comprises applying an aqueous binder comprising, as active constituents
a) at least one polyamine A, and
b) at least one saccharide compound S,
c) the weight ratio of the at least one polyamine A to the at least one saccharide compound S being 1:99 to 80:20, and
d) the total amount of the organic compounds present alongside the polyamine A and saccharide compound S in the aqueous binder being ≤30% by weight, based on the sum of the total amounts of polyamine A and saccharide compound S,
to the mineral fibers, optionally shaping the mineral fibers treated with the aqueous binder and then subjecting the mineral fibers thus treated to a thermal treatment step at a temperature of ≥ 110°C.

8. The process according to claim 7, wherein ≥ 1 and ≤ 100 g of binder (calculated as the sum of the total amounts of polyamine A and saccharide compound S based on solids) are used per 100 g of mineral fibers.

9. The process according to claim 7 or 8, wherein the thermal treatment step is affected at a temperature in the range of ≥ 150 and ≤ 250°C.

10. A shaped article obtainable by a process according to any of claims 7 to 9.

## Revendications

1. Utilisation d'un liant aqueux, contenant en tant que constituants actifs :
a) au moins un homopolymère contenant des unités vinylamine d'un amide d'acide vinylcarboxylique ayant un degré d'hydrolyse ≥ 50 % en moles et /ou une polyéthylène-imine à structure ramifiée [polyamine A] et
b) au moins un composé de saccharide S,
c) le rapport en poids entre ladite au moins une polyamine A et ledit au moins un composé de saccharide S étant de 1:99 à 80:20, et
d) la quantité totale des composés organiques présents dans le liant aqueux en plus de la polyamine A et du composé de saccharide S étant ≤ 30 % en poids, par rapport à la somme des quantités totales de polyamine A et de composé de saccharide S,
pour la fabrication de corps moulés à base de fibres minérales.

2. Utilisation selon la revendication 1, dans laquelle des monosaccharides, des oligosaccharides et/ou des polysaccharides, ainsi que leurs produits de substitution ou dérivés sont utilisés en tant que composés de saccharide S.

3. Utilisation selon la revendication 1 ou 2, dans laquelle du glucose, du mannose, du galactose, du xylose, du fructose, du ribose, du lactose, du maltose, du saccharose, de la maltodextrine et/ou du sirop de glucose sont utilisés en tant que composé de saccharide S.

4. Utilisation selon l'une quelconque des revendications 1 à 3, dans laquelle le rapport en poids entre ladite au moins une polyamine A et ledit au moins un composé de saccharide S est de 5:95 à 50:50.

5. Utilisation selon l'une quelconque des revendications 1 à 4, dans laquelle le pH dans la zone du liant aqueux est ≥ 6 et ≤ 11.

6. Utilisation selon l'une quelconque des revendications 1 à 5, dans laquelle la teneur en solides est ≥ 1 et ≤ 70 % en poids, par rapport à la somme des quantités totales de polyamine A et de composé de saccharide S.

7. Procédé de fabrication d'un corps moulé à base de fibres minérales, **caractérisé en ce qu'**un liant aqueux contenant en tant que constituants actifs :
a) au moins une polyamine A et
b) au moins un composé de saccharide S,
c) le rapport en poids entre ladite au moins une polyamine A et ledit au moins un composé de saccharide S étant de 1:99 à 80:20, et
d) la quantité totale des composés organiques présents dans le liant aqueux en plus de la polyamine A et du composé de saccharide S étant ≤ 30 % en poids, par rapport à la somme des quantités totales de polyamine A et de composé de saccharide S,
est appliqué sur les fibres minérales, les fibres minérales traitées avec le liant aqueux sont éventuellement mises en forme, puis les fibres minérales ainsi traitées sont soumises à une étape de traitement thermique à une température ≥ 110 °C.

8. Procédé selon la revendication 7, **caractérisé en ce que**, pour 100 g de fibres minérales, ≥ 1 et ≤ 100 g de liant (calculé en tant que somme des quantités totales de polyamine A et de composé de saccharide S en termes de solides) est utilisé.

9. Procédé selon la revendication 7 ou 8, **caractérisé en ce que** l'étape de traitement thermique a lieu à une température dans la plage ≥ 150 et ≤ 250 °C.

10. Corps moulé pouvant être obtenu par un procédé selon l'une quelconque des revendications 7 à 9.
